(19) Europäisches Patentamt
European Patent Office
Office européen des brevets

(11) **EP 4 170 584 A1**

(12) **EUROPEAN PATENT APPLICATION**
published in accordance with Art. 153(4) EPC

(43) Date of publication:
**26.04.2023 Bulletin 2023/17**

(21) Application number: **21825288.0**

(22) Date of filing: **03.06.2021**

(51) International Patent Classification (IPC):
***G06T 7/00*** (2017.01)

(52) Cooperative Patent Classification (CPC):
**G06T 7/00**

(86) International application number:
**PCT/JP2021/021274**

(87) International publication number:
**WO 2021/256289 (23.12.2021 Gazette 2021/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.06.2020 JP 2020106443**

(71) Applicant: **Kyocera Corporation
Kyoto-shi Kyoto 612-8501 (JP)**

(72) Inventors:
• **KIM Jaechul
Kyoto-shi, Kyoto 612-8501 (JP)**
• **FUNATSU Yohei
Kyoto-shi, Kyoto 612-8501 (JP)**

(74) Representative: **Viering, Jentschura & Partner
mbB
Patent- und Rechtsanwälte
Am Brauhaus 8
01099 Dresden (DE)**

(54) **FACE STRUCTURE ESTIMATION DEVICE, FACE STRUCTURE ESTIMATION METHOD, AND FACE STRUCTURE ESTIMATION PROGRAM**

(57) A facial structure estimating device 10 includes an acquiring unit 11 and a controller 13. The acquiring unit 11 acquires a facial image. The controller 13 functions as an identifier 15, an estimator 16, and an evaluator 17. The identifier 15 identifies an individual based on a facial image. The estimator 16 estimates a facial structure based on the facial image. The evaluator 17 calculates a validity of the facial structure estimated by the estimator 16. The evaluator 17 allows facial images and facial structures whose validity is greater than or equal to a threshold to be applied to training of the estimator 16. The controller 13 causes application of facial images and facial structures whose validity is greater than or equal to a threshold to training of the estimator 16 to be based on identification results of individuals produced by the identifier 15.

FIG. 1

**Description**

CROSS-REFERENCE TO RELATED APPLICATIONS

This application claims priority of Japanese Patent Application No. 2020-106443 filed in Japan on June 19, 2020 and the entire disclosure of this application is hereby incorporated by reference.

TECHNICAL FIELD

The present invention relates to a facial structure estimating device, a facial structure estimating method, and a facial structure estimating program.

BACKGROUND OF INVENTION

For example, devices that perform various functions in accordance with the condition of a driver inside a vehicle, such as encouraging a drowsy occupant to rest or shifting to automatic operation, are being considered. In such devices, there is a need for simple recognition of the condition of an occupant. Ascertaining the condition of a person, such as an occupant, by estimating the facial structure in accordance with the condition of the person is being considered. For example, estimating a facial structure from a facial image using deep learning is known (for example, refer to Patent Literature 1).

CITATION LIST

PATENT LITERATURE

Patent Literature 1: International Publication No. 2019-176994

SUMMARY

In order to solve the above-described problem, in a First Aspect, a facial structure estimating device includes an acquiring unit and a controller.
The acquiring unit is configured to acquire a facial image.
The controller is configured to output a facial structure of the facial image.
The controller functions as an identifier, an estimator, and an evaluator.
The identifier is configured to identify an individual of the facial image acquired by the acquiring unit based on the facial image.
The estimator is configured to estimate the facial structure of the facial image acquired by the acquiring unit based on the facial image.
The evaluator is configured to calculate a validity of the facial structure estimated by the estimator and allow the facial image and the facial structure for which a validity is greater than or equal to a threshold to be applied to training of the estimator.
The controller causes application of the facial image and the facial structure whose validity is greater than or equal to the threshold to training of the estimator to be based on an identification result of the individual produced by the identifier.
In a Second Aspect, a facial structure estimating method includes an acquiring step and an output step.
In the acquiring step, a facial image is acquired.
In the output step, a facial structure of the facial image is acquired.
The output step includes an identifying step, an estimating step, an evaluating step, and an applying step.
In the identifying step, an individual in the facial image acquired in the acquiring step is acquired based on the facial image.
In the estimating step, the facial structure of the facial image acquired in the acquiring step is estimated based on the facial image.
In the evaluating step, a validity of the facial structure estimated in the estimating step is calculated and the facial image and the facial structure for which the validity is greater than or equal to a threshold is allowed to be applied to training of the estimating step.
In the applying step, application of the facial image and the facial structure for which the validity is greater than or equal to the threshold is caused to be applied to training of the estimating step based on an identification result of the individual produced by the identifying step.

In a Third Aspect, a facial structure estimating program causes a computer to function as an acquiring unit and a controller.

The acquiring unit is configured to acquire a facial image.

The controller is configured to output a facial structure of the facial image.

The controller functions as an identifier, an estimator, and an evaluator.

The identifier is configured to identify an individual of the facial image acquired by the acquiring unit based on the facial image.

The estimator is configured to estimate the facial structure of the facial image acquired by the acquiring unit based on the facial image.

The evaluator is configured to calculate a validity of the facial structure estimated by the estimator and to allow the facial image and the facial structure for which a validity is greater than or equal to a threshold to be applied to training of the estimator.

The controller causes application of the facial image and the facial structure whose validity is greater than or equal to the threshold to training of the estimator to be based on an identification result of the individual produced by the identifier.

BRIEF DESCRIPTION OF THE DRAWINGS

FIG. 1 is a block diagram illustrating an outline configuration of a facial structure estimating device according to an embodiment.

FIG. 2 is a conceptual diagram for describing training used to primarily construct a general estimator in FIG. 1.

FIG. 3 is a conceptual diagram for describing a method for calculating validity, i.e., the ground truth, based on a facial structure estimated by the general estimator in FIG. 1 and a labeled facial structure.

FIG. 4 is a conceptual diagram for describing training used to primarily construct an evaluator in FIG. 1.

FIG. 5 is a conceptual diagram for describing generation of a set consisting of a facial image and a pseudo labeled facial structure used to secondarily construct the general estimator in FIG. 1.

FIG. 6 is a conceptual diagram for describing training used to secondarily construct the general estimator in FIG. 1.

FIG. 7 is a conceptual diagram for describing a method for calculating validity, i.e., the ground truth, based on a facial structure estimated by the general estimator in FIG. 1 and a pseudo labeled facial structure.

FIG. 8 is a conceptual diagram for describing training used to secondarily construct the evaluator in FIG. 1.

FIG. 9 is a conceptual diagram for describing training for constructing an identifier in FIG. 1.

FIG. 10 is a conceptual diagram for describing generation of a set consisting of a facial image and a pseudo labeled facial structure for constructing an individual estimator in FIG. 1.

FIG. 11 is a conceptual diagram for describing training for constructing the individual estimator in FIG. 1.

FIG. 12 is a flowchart for describing construction processing executed by a controller in FIG. 1.

FIG. 13 is a flowchart for describing estimation processing executed by the controller in FIG. 1.

FIG. 14 is a conceptual diagram for describing generation of a secondary feature by a specific extractor using a feature generated by an other-than-specific extractor.

FIG. 15 is a conceptual diagram for describing generation of a secondary feature by a specific extractor using a feature generated by a non-specific extractor.

FIG. 16 is a conceptual diagram for describing training of a specific extractor using an other-than-specific extractor.

FIG. 17 is a conceptual diagram for describing training of a specific extractor using a non-specific extractor.

DESCRIPTION OF EMBODIMENTS

Hereafter, a facial structure estimating device to which an embodiment of the present disclosure has been applied will be described while referring to the drawings. The following description of a facial structure estimating device to which an embodiment of the present disclosure has been applied also serves as a description of a facial structure estimating method and a facial structure estimating program to which an embodiment of the present disclosure has been applied.

A facial structure estimating device according to an embodiment of the present disclosure is, for example, provided in a moving body. Such moving bodies may include, for example, vehicles, ships, and aircraft. Vehicles may include, for example, automobiles, industrial vehicles, rail vehicles, motorhomes, and fixed-wing aircraft traveling along runways. Automobiles may include, for example, passenger cars, trucks, buses, motorcycles, and trolleybuses. Industrial vehicles may include, for example, industrial vehicles used in agriculture and construction. Industrial vehicles may include, for example, forklift trucks and golf carts. Industrial vehicles used in agriculture may include, for example, tractors, cultivators, transplanters, binders, combine harvesters, and lawn mowers. Industrial vehicles used in construction may include, for example, bulldozers, scrapers, excavators, cranes, dump trucks, and road rollers. Vehicles may include vehicles that are human powered. The categories of vehicles are not limited to the above examples. For example, automobiles may include industrial vehicles that can travel along roads. The same vehicles may be included in multiple categories. Ships may include, for example, jet skis, boats, and tankers. Aircraft may include, for example, fixed-wing and rotary-wing aircraft.

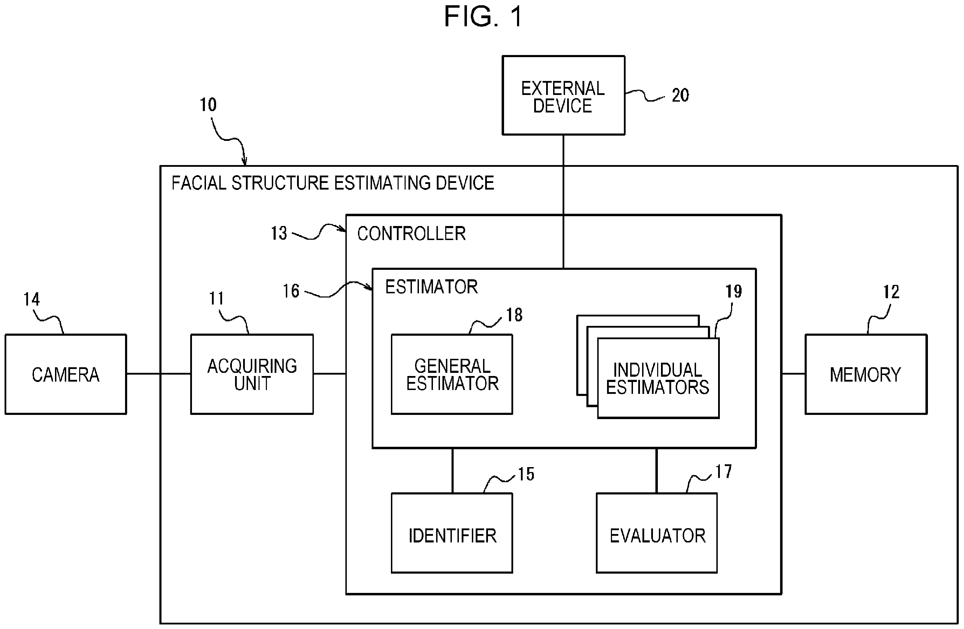

As illustrated in FIG. 1, a facial structure estimating device 10 according to an embodiment of the present disclosure includes an acquiring unit 11, a memory 12, and a controller 13.

The acquiring unit 11, for example, acquires a facial image, which is an image of the face of an occupant captured by a camera 14. The camera 14 is, for example, mounted at a position where the camera 14 can capture an image of the region around the face of an occupant located at a specific position in a moving body such as in the driver's seat. The camera 14 captures facial images at 30 fps, for example.

The memory 12 includes any suitable storage device such as a random access memory (RAM) or a read only memory (ROM). The memory 12 stores various programs that make the controller 13 function and a variety of information used by the controller 13.

The controller 13 includes at least one processor and memory. Such processors may include general-purpose processors into which specific programs are loaded to perform specific functions, and dedicated processors dedicated to specific processing. Dedicated processors may include an application specific integrated circuit (ASIC). Processors may include programmable logic devices (PLDs). PLDs may include field-programmable gate arrays (FPGAs). The controller 13 may be either a system-on-a-chip (SoC) or a system in a package (SiP), in which one or more processors work together. The controller 13 controls operation of each component of the facial structure estimating device 10.

The controller 13 outputs a facial structure of a facial image acquired by the acquiring unit 11 to an external device 20. Facial structures are features that identify facial expressions and so on that change in accordance with a person's condition, and consist of, for example, a collection of points defined along the contours of a face, such as the tip of the chin, a collection of points defined along the contours of the eyes, such as the inner and outer corners of the eyes, or a collection of points defined along the bridge of the nose from the tip of the nose to the base of the nose. Outputting of the facial structure by the controller 13 will be described in detail below. The controller 13 functions as an identifier 15, an estimator 16, and an evaluator 17.

The identifier 15 identifies an individual in a facial image acquired by the acquiring unit 11 based on the image. The identifier 15 consists of, for example, a multilayer-structure neural network. As described later, the identifier 15 is constructed by performing supervised learning.

The estimator 16 estimates the structure of a facial image acquired by the acquiring unit 11 based on the facial image. The estimator 16 includes, for example, a general estimator 18 and individual estimators 19. The general estimator 18 estimates a facial structure based on a facial image of an non-specific individual that cannot be identified by the identifier 15. The individual estimators 19 are selected so as to correspond to individuals identified by the identifier 15 and each estimate the facial structure of an individual based on a facial image of an individual identified by the identifier 15. Facial structures estimated by the individual estimators 19 are output from the controller 13. The general estimator 18 and the individual estimators 19, for example, each consist of a multilayer-structure neural network. The general estimator 18 and the individual estimators 19 are constructed by performing supervised learning as described below.

The evaluator 17 determines the validity of a facial structure estimated by the estimator 16. The evaluator 17 allows facial images and facial structures whose validity is greater than or equal to a threshold to be applied to training of the estimator 16. As described below, the application of facial structures and facial images whose validities are greater than or equal to a threshold to training of the estimator 16 is based on identification results of individuals produced by the identifier 15. The evaluator 17 consists of, for example, a multilayer-structure neural network. The evaluator 17 is constructed by performing supervised learning.

Next, the supervised learning of the identifier 15, the estimator 16, and the evaluator 17 will be described. Supervised learning is performed in order to construct the general estimator 18 and the evaluator 17 at the time of manufacture of the facial structure estimating device 10. Therefore, the general estimator 18 and the evaluator 17 have already been trained when the facial structure estimating device 10 is used. Supervised learning is performed while the facial structure estimating device 10 is being used in order to construct the identifier 15 and the individual estimators 19.

Construction of the general estimator 18 and the evaluator 17 is described below. Multiple sets each consisting of a facial image and a labeled facial structure for the facial image are used to construct the general estimator 18 and the evaluator 17 using machine learning. A labeled facial structure is a facial structure that is the ground truth for a facial image. Labeled facial structures are created using human judgment, for example, based on definitions such as those described above.

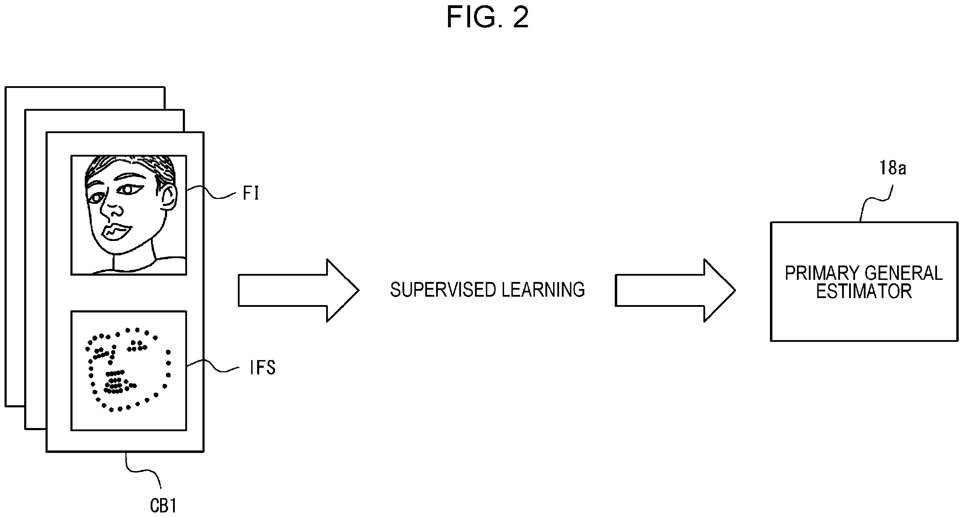

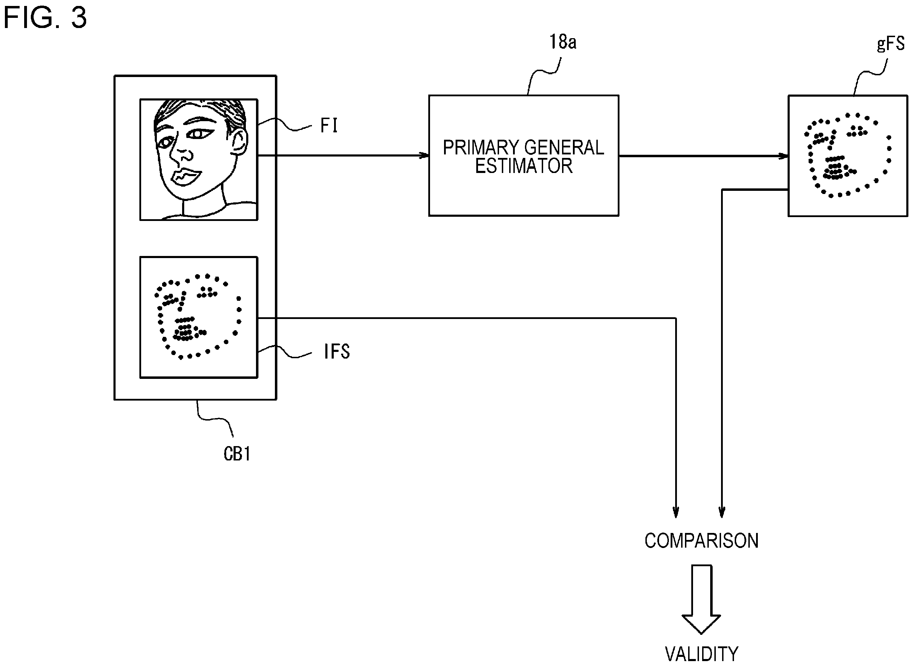

As illustrated in FIG. 2, a primary general estimator 18a is constructed by performing supervised learning using labeled facial structures IFS as the ground truths for facial images FI. As illustrated in FIG. 3, the constructed primary general estimator 18 estimates a facial structure gFS from the facial images FI included in multiple sets CB 1.

The controller 13 calculates the validity of the estimated facial structure gFS using the labeled facial structure IFS corresponding to the facial image FI used to estimate the facial structure gGS. Validity is the agreement of the estimated facial structure gFS with the labeled facial structure IFS, and is calculated, for example, so as to be lower the greater the distance between a point making up the estimated facial structure gFS and a point making up the labeled facial structure IFS becomes and so as to be higher as this difference approaches zero.

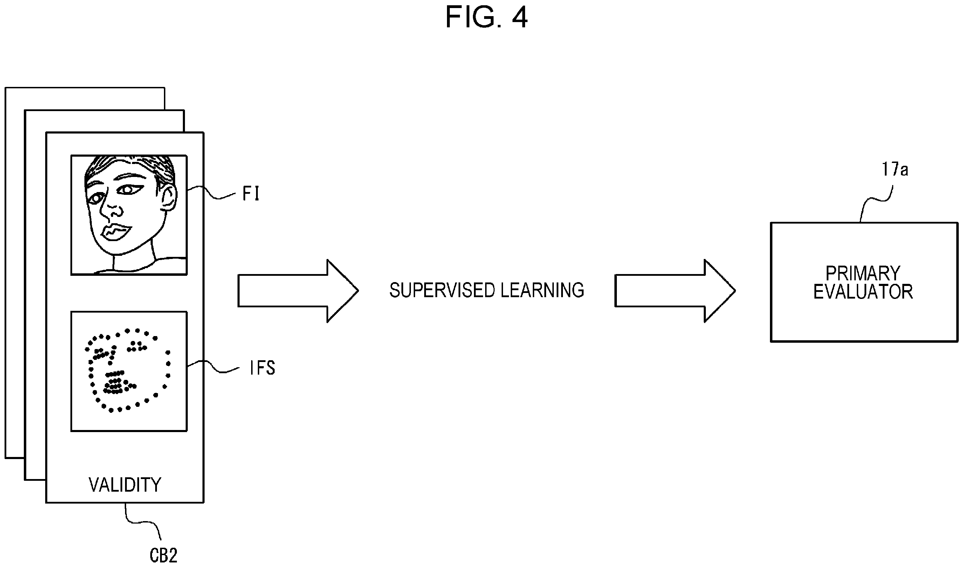

As illustrated in FIG. 4, multiple sets CB2 each consisting of a facial image FI, a labeled facial structure IFS, and a validity are used to construct a primary evaluator 17a. The primary evaluator 17a is constructed by performing supervised learning using the validities as the ground truths for the facial images FI and the labeled facial structures IFS.

Additional machine learning may be performed for the primary general estimator 18a. Simple facial images FI without labeled facial structures IFS are used in the additional machine learning for the primary general estimator 18a.

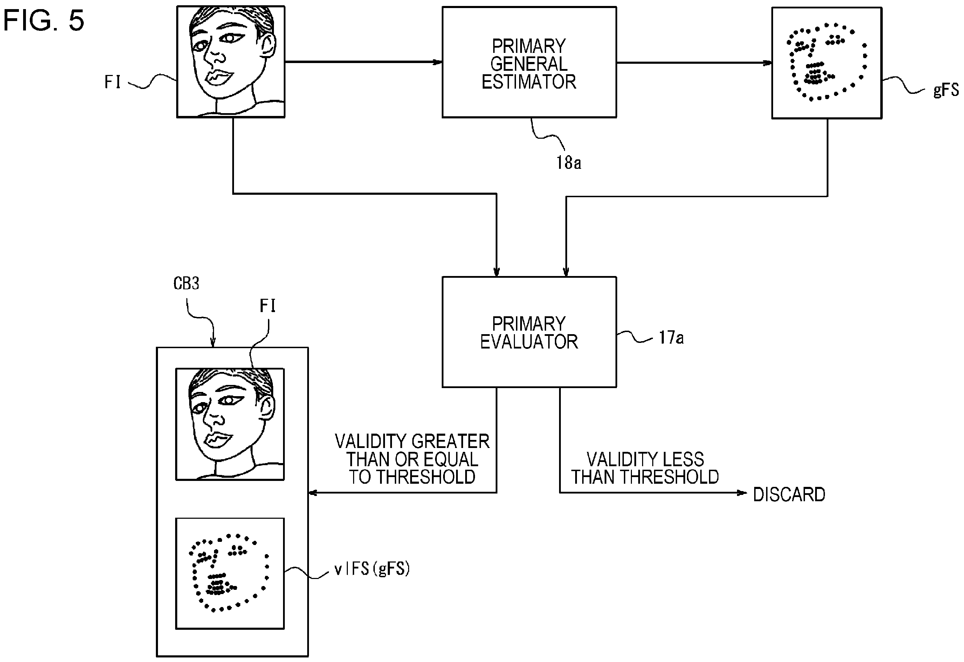

As illustrated in FIG. 5, for additional machine learning, the primary general estimator 18a estimates a facial structure gFS of a facial image FI based on the facial image FI. The evaluator 17 calculates the validity of the estimated facial structure gFS based on the facial image FI and the estimated facial structure gFS. When the calculated validity is greater than or equal to a threshold, the estimated facial structure gFS is combined with the facial image FI as a pseudo labeled facial structure vIFS. Estimation of a facial structure gFS is performed using a larger number of facial images FI than the facial images FI of a true labeled facial structure IFS, and sets CB3 each consisting of a pseudo labeled facial structure vIFS and a facial image FI are generated.

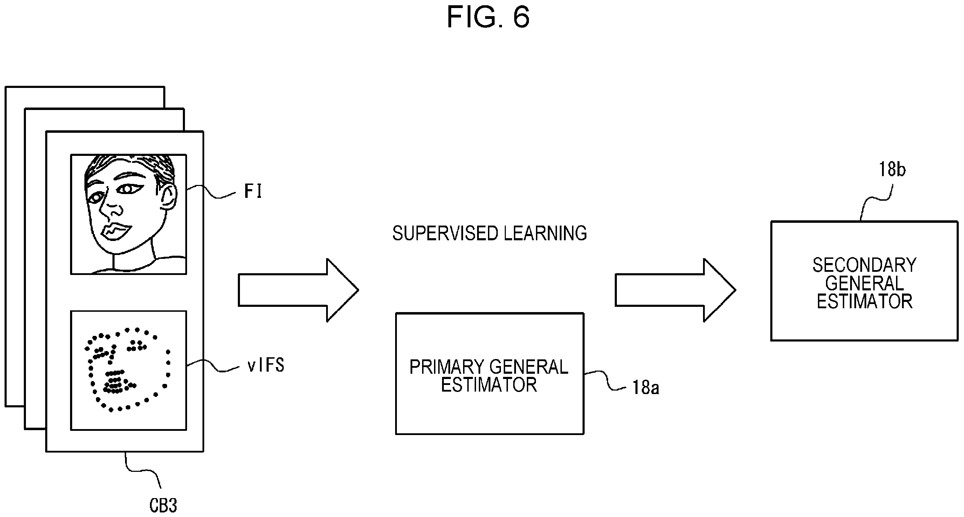

As illustrated in FIG. 6, supervised learning is performed for the primary general estimator 18a using multiple sets CB3 each consisting of a facial image FI and a pseudo labeled facial structure vIFS and a secondary general estimator 18b is constructed. When a secondary general estimator 18b has been constructed, data for building the secondary general estimator 18b is generated and the controller 13 functions as a general estimator 18 based on the data. When a secondary general estimator 18b has not been constructed, data for building the primary general estimator 18a is generated and the controller 13 functions as a general estimator 18 based on the data.

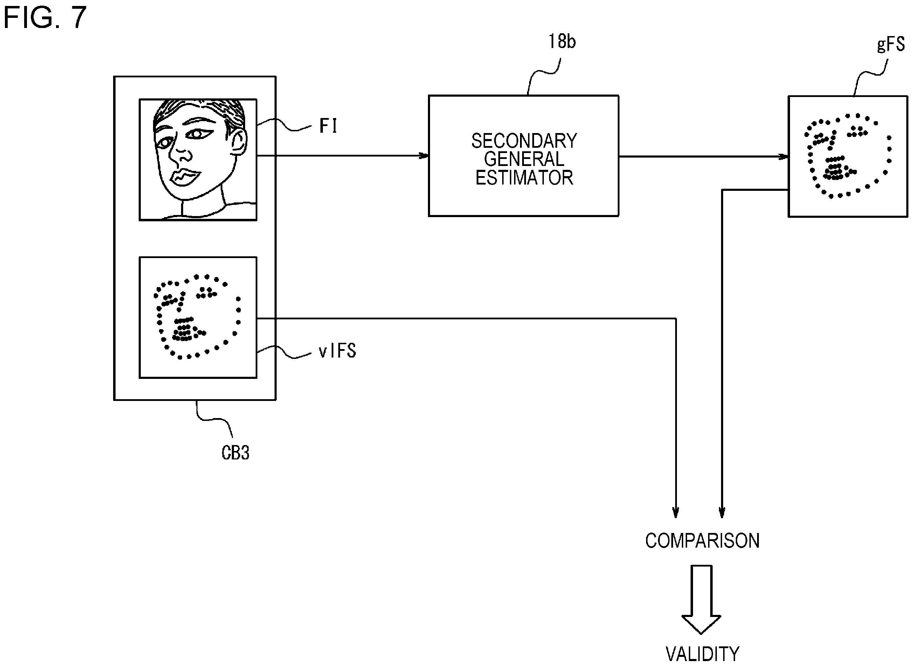

Additional machine learning may be performed for the primary evaluator 17a. Sets CB3 of facial images FI and pseudo labeled facial structures vIFS are used in additional machine learning of the primary evaluator 17a. As illustrated in FIG. 7, for additional machine learning, the secondary general estimator 18b estimates a facial structure gFS of a facial image FI based on a facial image FI that has been combined with a pseudo labeled facial structure vIFS. The validity of the estimated facial structure gFS is calculated using a pseudo labeled facial structure vIFS corresponding to the facial image FI.

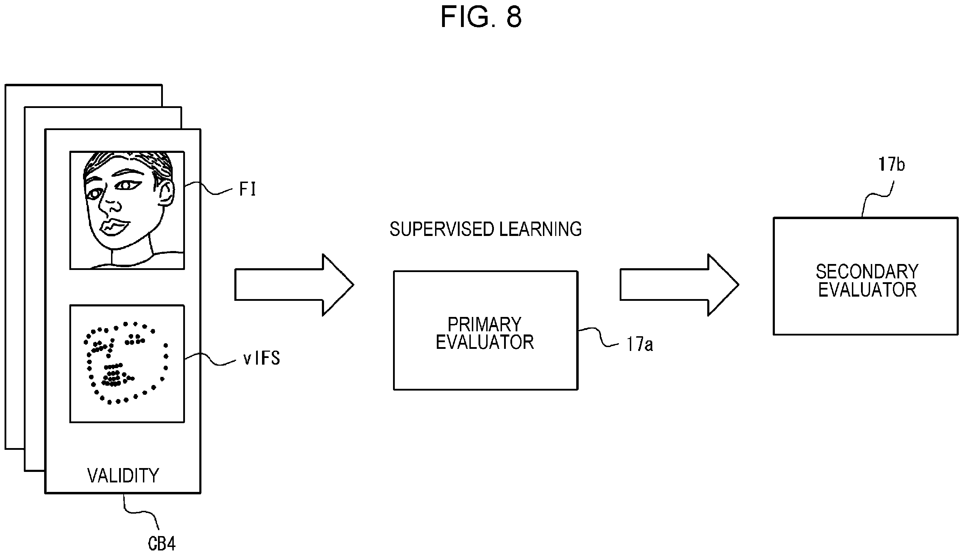

As illustrated in FIG. 8, supervised learning is performed for the primary evaluator 17a using multiple sets CB4 each consisting of a facial image FI, a pseudo labeled facial structure vIFS, and a validity, and a secondary evaluator 17b is constructed. When a secondary evaluator 17b has been constructed, data for building the secondary evaluator 17b is generated and the controller 13 functions as the evaluator 17 based on this data. When a secondary evaluator 17b has not been constructed, data for building the primary evaluator 17a is generated and the controller 13 functions as the evaluator 17 based on this data.

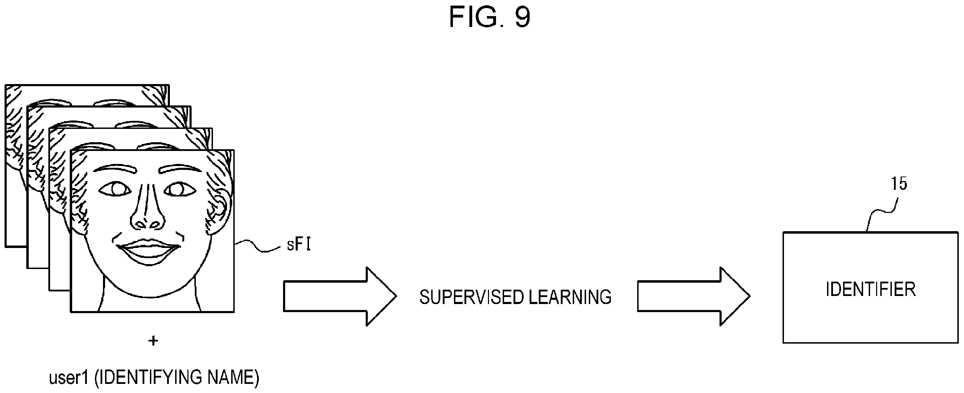

Construction of the identifier 15 is described next. For example, when a new occupant is captured by the camera 14, machine learning for constructing the identifier 15 is performed. When the identifier 15 cannot identify an individual from the facial image FI or when an input unit of the facial structure estimating device 10 detects input of a new occupant, the controller 13 determines that a facial image FI captured by the camera 14 is a new occupant and performs machine learning. As illustrated in FIG. 9, machine learning is performed taking an identifying name newly created for multiple facial images sFI of a specific individual captured at, for example, 30 fps by the camera 14 to be a ground truth, and in this way an identifier 15 capable of identifying this individual is constructed. Each time a new occupant is captured by the camera 14, supervised learning is performed, and thus the identifier 15 is constructed so as to be capable of identifying multiple learned individuals. Each time the identifier 15 is constructed, data for building the identifier 15 is generated, and the controller 13 functions as the identifier 15 based on this data.

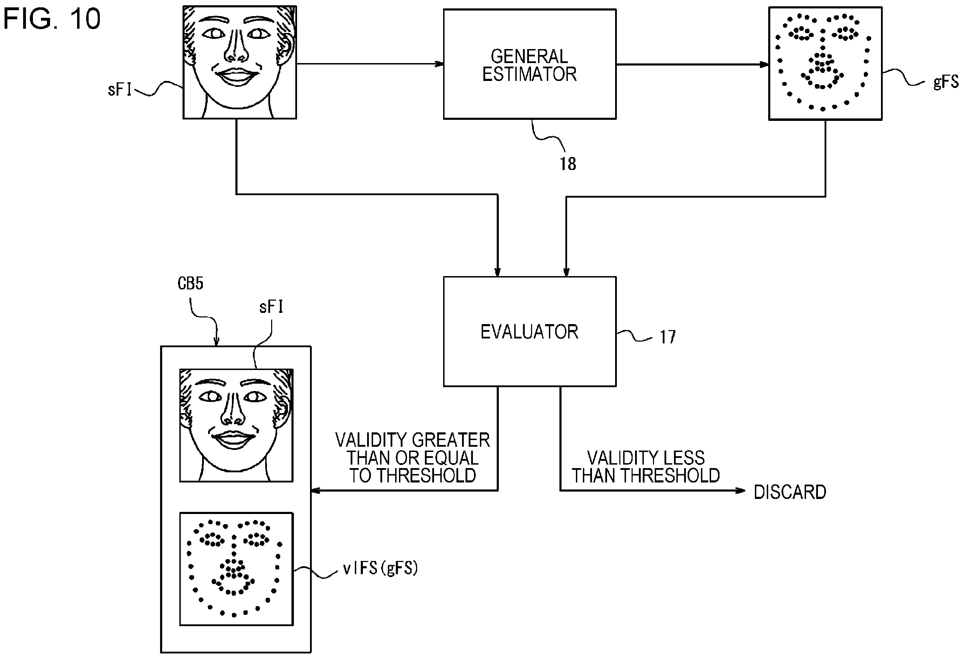

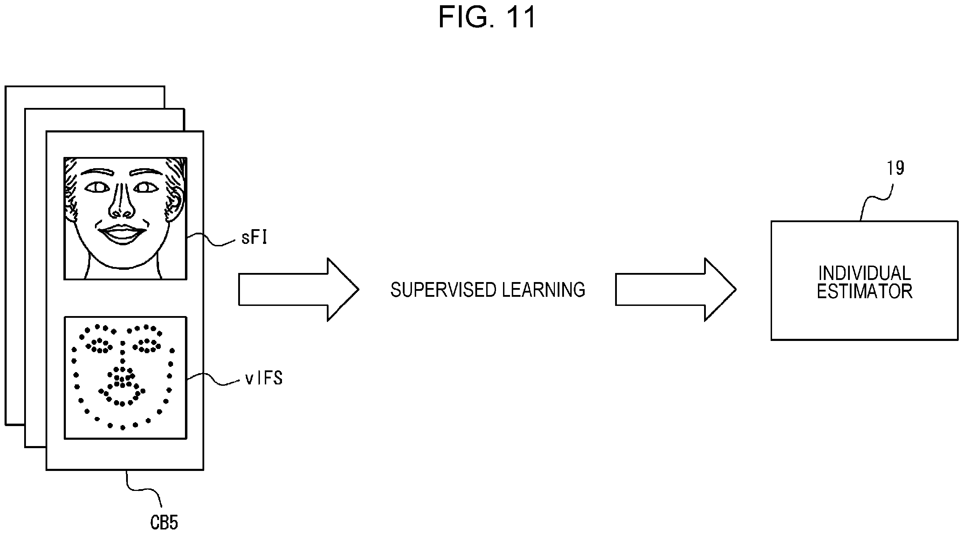

Construction of the individual estimators 19 is described next. Once the identifier 15 capable of identifying the individual who is a new occupant has been constructed as described above, new construction of an individual estimator 19 corresponding to this individual begins. As illustrated in FIG. 10, in order to construct the individual estimator 19, the general estimator 18 estimates a facial structure gFS of a facial image sFI of the individual based on the facial image sFI. The evaluator 17 calculates the validity of the estimated facial structure gFS based on the facial image sFI of the individual and the estimated facial structure fFs. When the calculated validity is greater than or equal to a threshold, the evaluator 17 applies the facial image sFI and the facial structure gFS to training for constructing an individual estimator 19 corresponding to the individual that the identifier 15 can now identify. In other words, the facial image sFI and the facial structure gFS for which the validity is greater than or equal to the threshold are applied to training the estimator 16 based on the identification result produced for the individual by the identifier 15. The evaluator 17 generates multiple sets CB5 each consisting of a facial image sFI and a facial structure gFS for which the validity is greater than or equal to the threshold as pseudo labeled facial structures vIFS. As illustrated in FIG. 11, an individual estimator 19 is constructed by performing supervised learning using the facial structures vIFS of the respective multiple generated sets CB5 as ground truths for the facial images sFI. When constructing an individual estimator 19 corresponding to a specific individual, data for building the individual estimator 19 is generated, and the controller 13 functions as the individual estimator 19 based on the data.

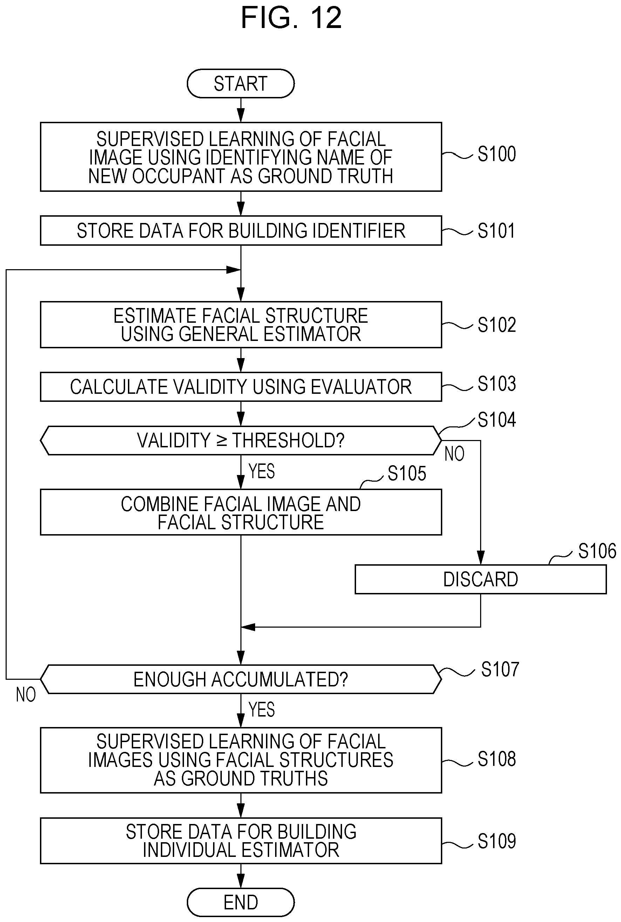

Next, construction processing performed by the controller 13 in this embodiment will be described using the flowchart in FIG. 12. The construction processing starts when a new occupant is captured by the camera 14 as described above.

In Step S100, the controller 13 performs supervised learning of a facial image sFI of a specific individual with an identifying name of the new occupant being used as the ground truth. After the supervised learning, the process advances to Step S101.

In Step S101, the controller 13 stores in the memory 12 data for building an identifier 15 capable of identifying the new individual constructed by the supervised learning in Step S100. After storing the data, the process advances to Step S102.

In Step S102, the controller 13 makes the general estimator 18 estimate a facial structure gFS of the individual based on the facial image sFI of one frame of the specific individual. After the estimation, the process advances to Step S103.

In Step S103, the controller 13 makes the evaluator 17 calculate the validity of the facial structure gFS estimated in Step S102. After the calculation, the process advances to Step S104.

In Step S104, the controller 13 determines whether the validity calculated in Step S103 is greater than or equal to a threshold. When the interval is greater than or equal to the threshold, the process advances to Step S105. When the interval is not greater than or equal to the threshold, the process advances to Step S106.

In Step S105, the controller 13 combines the facial image sFI of the specific individual used in the estimation of the facial structure gFS in Step S102 with the facial structure gFS. After that, the process advances to Step S107.

In Step S106, the controller 13 discards the facial image sFI of one frame of the specific individual used in the estimation of the facial structure gFS in Step S102 and the facial structure gFS. After that, the process advances to Step S107.

In Step S107, the controller 13 determines whether or not enough sets CB4 each consisting of a facial image sFI of the specific individual and a facial structure gFS have accumulated. Whether or not enough sets CB4 have accumulated may be determined based on whether or not the number of sets CB4 has exceeded a threshold. When enough sets CB4 have not accumulated, the process returns to Step S102. When enough sets CB4 have accumulated, the process advances to Step S108. Note that, in this embodiment, the process may advance to Step S108 without performing Step S107.

In Step S108, the controller 13 performs supervised learning of facial images sFI of the specific individual using the facial structures gFS in the sets CB4 as the ground truths, which are the pseudo labeled facial structures vlFS. After the supervised learning, the process advances to Step S109.

In Step S109, the controller 13 stores in the memory 12 data for building an individual estimator 19 corresponding to the new individual constructed by the supervised learning in Step S108. After storing the data, the construction processing ends.

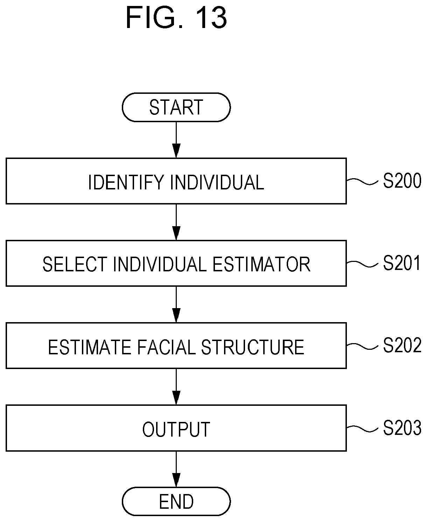

Next, estimation processing executed by the controller 13 in this embodiment will be described using the flowchart in FIG. 13. The estimation processing begins when an occupant who is not new is captured by the camera 14.

In Step S200, the controller 13 causes the identifier 15 to perform identification of the individual based on a facial image FI captured by the camera 14. After the identification, the process advances to Step S201.

In Step S201, the controller 13 selects an individual estimator 19 corresponding to the individual identified in Step S200. After making this selection, the process advances to Step S202.

In Step S202, the controller 13 causes the individual estimator 19 selected in Step S201 to estimate a facial structure gFS based on the facial image FI used in identification of the individual in Step S200. After the estimation, the process advances to Step S203.

In Step S203, the controller 13 outputs the facial structure gFS estimated in Step S202 to the external device 20. After that, the estimation processing ends.

The thus-configured facial structure estimating device 10 of this embodiment causes application of the facial structure gFS whose validity is greater than or equal to a threshold and the facial image FI to training of the estimator 16 to be based on the identification result of the individual produced by the identifier 15. With this configuration, the facial structure estimating device 10 can select a facial image sFI and a facial structure gFS that are suitable for training and can train the estimator 16, and therefore the accuracy of estimation of a facial structure gFS based on a facial image FI can be improved. Since the facial structure estimating device 10 bases selection of facial images sFI and facial structures gFS suitable for training on validities calculated by the evaluator 17, there is no need to attach ground truth labels to a large amount of training data, and therefore an increase in annotation cost can be reduced.

The present invention has been described based on the drawings and examples, but it should be noted that a variety of variations and amendments may be easily made by one skilled in the art based on the present disclosure.

Therefore, it should be noted that such variations and amendments are included within the scope of the present invention.

For example, in this embodiment, the individual estimators 19 are independently constructed by performing training using facial images sFI and pseudo labeled facial structure vlFS of specific individuals, but this configuration does not have to be adopted. Individual estimators 19 may be constructed based on individual estimators 19 corresponding to other individuals.

For example, the individual estimators 19 may include feature extractors and inferring units. A feature extractor is, for example, a convolutional neural network (CNN) and performs feature extraction on an acquired facial image sFI. A feature extractor, for example, extracts a feature based on the brightness of a facial image sFI. An extracted feature is, for example, a feature map. A feature extractor, for example, performs feature extraction based on the brightness of a facial image sFI. An inferring unit estimates a facial structure gFS based on a feature extracted by a feature extractor.

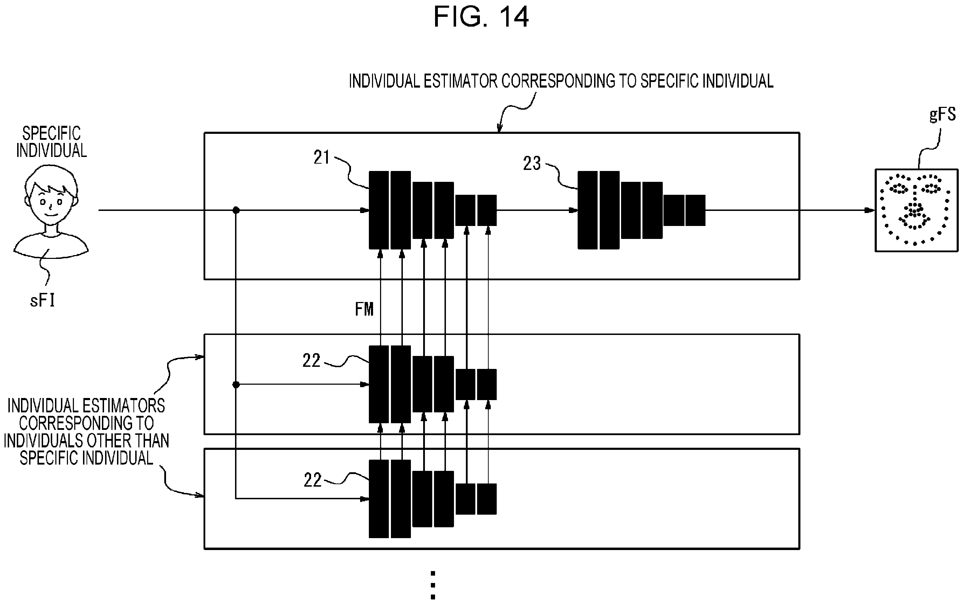

As illustrated in FIG. 14, a feature extractor (hereafter "specific extractor") 21 corresponding to a specific individual may acquire features from feature extractors (hereafter, "other-than-specific extractors") 22 of individual estimators 19 corresponding to individuals other than the specific individual corresponding to the feature extractor 21. The other-than-specific extractors 22 provide a feature F extracted based on a facial image sFI of the specific individual corresponding to the specific extractor 21 to the specific extractor 21. The specific extractor 21 may generate a secondary feature for output based on a feature primarily extracted by the specific extractor 21 and the feature F acquired from the other-than-specific extractors 22. An inferring unit 23 may estimate a facial structure gFS of the specific individual.

The specific extractor 21 generates a secondary feature by performing averaging, for example. The other-than-specific extractors 22 may provide a feature F generated for each layer of the other-than-specific extractors 22 to the specific extractor 21. The specific extractor 22 may generate a feature using the next layer of the specific extractor 21 based on the feature F acquired in each layer and a feature generated in corresponding layer of the specific extractor 21.

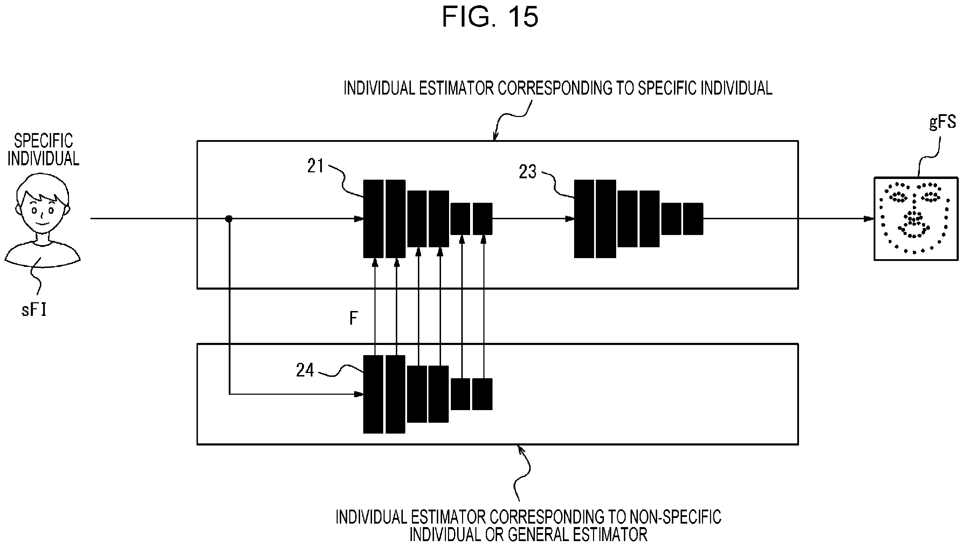

Alternatively, as illustrated in FIG. 15, the specific extractor 21 may acquire a feature from an individual estimator 19 corresponding to a non-specific individual or a feature extractor (hereafter, "non-specific extractor") 24 of the general estimator 18. The non-specific extractor 24 provides a feature F extracted based on a facial image sFI of a specific individual corresponding to the specific extractor 21 to the specific extractor 21. The specific extractor 21 may generate a secondary feature for output based on a feature primarily extracted by the specific extractor 21 and a feature F acquired from the non-specific extractor 24. The inferring unit 23 may estimate a facial structure gFS of the specific individual based on a feature map for output.

The specific extractor 21 generates a secondary feature by performing averaging, for example. The non-specific extractor 24 may provide a feature F generated for each layer of the non-specific extractor 24 to the specific extractor 21. The specific extractor 22 may generate a feature using the next layer of the specific extractor 21 based on the feature F acquired in each layer and a feature generated in corresponding layer of the specific extractor 21.

When an individual estimator 19 is newly constructed, the specific extractor 21 is trained based on extraction results of the already constructed other-than-specific extractor 22. Training of a feature extractor is described in detail below.

Similarly to when constructing an individual estimator 19 described above, the specific extractor 21 and the inferring unit 23 are constructed by carrying out training using multiple sets CB5 of facial images sFI and facial structures gFS for which the validities are greater than or equal to a threshold as a pseudo labeled facial structures vlFS for a specific individual.

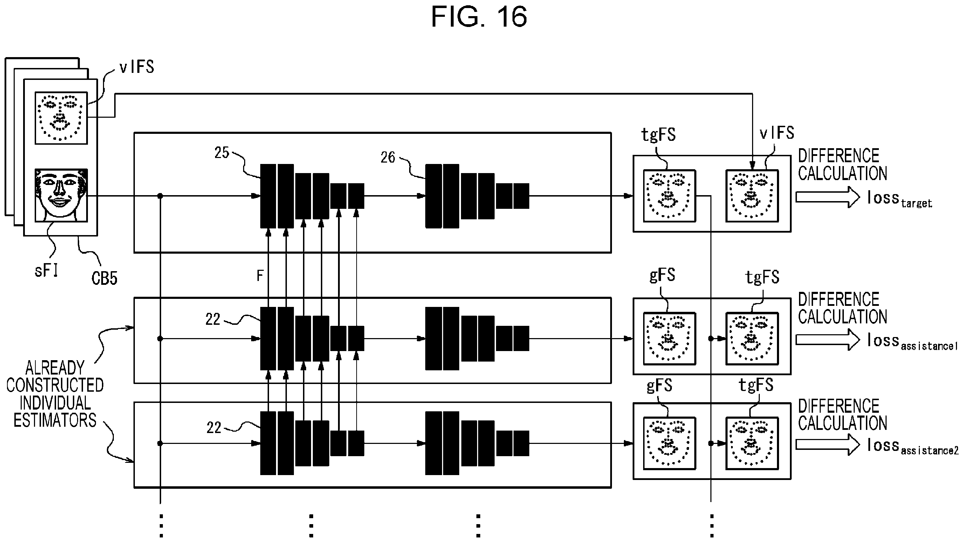

As illustrated in FIG. 16, when constructing a specific extractor 21, an individual estimator 19 that has already been constructed for an individual other than the corresponding specific individual estimates a facial structure gFS based on a facial image sFI among the multiple sets CB5 for the specific individual. The feature extractor of the individual estimator 19, i.e., the other-than-specific extractor 22 generates a feature F based on the facial image sFI. The other-than-specific extractor 22 may generate a feature F for each layer.

A learning specific extractor 25 generates a secondary feature for output based on a feature primarily extracted by the learning specific extractor 25 based on a facial image sFI and a feature F acquired from the other-than-specific extractor 22. The learning specific extractor 25 generates a secondary feature by performing averaging, for example. A learning inferring unit 26 estimates a facial structure tgFS being learned based on a feature acquired from the learning specific extractor 25.

The controller 13 calculates a first difference $loss_{target}$ between the facial structure tgFS being learned and the pseudo labeled facial structure vlFS in the multiple sets CB5. The controller 13 calculates a second difference $loss_{assistance}$ between the facial structure tgFS being learned and a facial structure gFS estimated by each individual estimator 19 already constructed. The controller 13 calculates an overall difference $loss_{final}$, represented by Equation (1), by summing together the first difference $loss_{target}$ and the second differences $loss_{assistance}$, which are each weighted.

[Math 1]

$$loss_{final} = loss_{target} + \gamma \times loss_{assistance1} + \beta \times loss_{assistance2} + \cdots$$

In Equation (1), $\gamma$ and $\beta$ are weighting coefficients, $\gamma$ and $\beta$ may be less than 1 or may be less than or equal to 0.5, and the sum of the weighting coefficients may be less than or equal to 0.5.

The controller 13 constructs the specific extractor 21 and the inferring unit 23 by performing learning such that the overall difference $loss_{final}$ is minimized. In addition to the multiple sets CB5 of facial images sFI and pseudo labeled facial structures vlFS of a specific individual corresponding to the specific extractor 21, facial images sFI and pseudo labeled facial structures vlFS other than those of the specific individual may be used in training in the construction of the specific extractor 21 and the inferring unit 23 described above.

Alternatively, when an individual estimator 19 is newly constructed, the specific extractor 21 is trained based on extraction results of an already constructed non-specific extractor 24. Training of a feature extractor is described in detail below.

Similarly to when constructing an individual estimator 19 described above, the specific extractor 21 and the inferring unit 23 are constructed by carrying out training using multiple sets CB5 of facial images sFI and facial structures gFS for which the validities are greater than or equal to a threshold as a pseudo labeled facial structures vlFS for a specific individual.

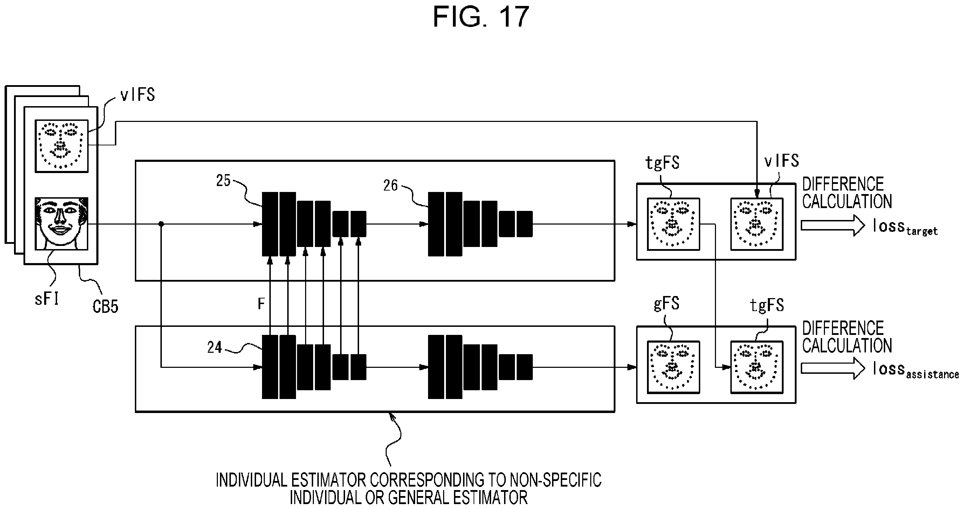

As illustrated in FIG. 17, when constructing a specific extractor 21, an individual estimator 19 that has already been constructed for a non-specific individual or the general estimator 18 estimates a facial structure gFS based on a facial image sFI among the multiple sets CB5 for the specific individual. The feature extractor of the individual estimator 19 or the general estimator 18, i.e., the non-specific extractor 24 generates a feature F based on the facial image sFI. The non-specific extractor 24 may generate a feature F for each layer.

The learning specific extractor 25 generates a secondary feature for output based on a feature primarily extracted by the learning specific extractor 25 based on a facial image sFI and a feature F acquired from the non-specific extractor 24. The learning specific extractor 25 generates a secondary feature by performing averaging, for example. A learning inferring unit 26 estimates a facial structure tgFS being learned based on a feature acquired from the learning specific extractor 25.

The controller 13 calculates a first difference $loss_{target}$ between the facial structure tgFS being learned and the pseudo labeled facial structure vlFS in the multiple sets CB5. The controller 13 calculates a second difference $loss_{assistance}$ between the facial structure tgFS being learned and a facial structure gFS estimated by the already constructed individual estimator 19 or general estimator 18. The controller 13 calculates an overall difference $loss_{final}$, represented by Equation (2), by summing together the first difference $loss_{target}$ and the second difference $loss_{assistance}$, which has been weighted.

[Math 2]

$$loss_{final} = loss_{target} + \gamma \times loss_{assistance}$$

In Equation (2), $\gamma$ is a weighting coefficient, $\gamma$ may be less than 1 or may be less than or equal to 0.5.

The controller 13 constructs the specific extractor 21 and the inferring unit 23 by performing learning such that the overall difference $loss_{final}$ is minimized.

Individual estimators 19 corresponding to non-specific individuals may be constructed by performing learning using multiple sets of publicly available facial images and labeled facial structures for the facial images. The individual estimators 19 corresponding to non-specific individuals may be constructed separately from the general estimator 18. The individual estimators 19 corresponding to non-specific individuals constructed separately from the general estimator 18 may be further trained using multiple sets CB5 of facial images sFI and facial structures gFS having validities greater than or equal to a threshold as pseudo labeled facial structures vlFS for specific individuals.

As described above, constructing an individual estimator 19 based on individual estimators 19 corresponding to other individuals leads to improved estimation accuracy for facial structures gFS.

REFERENCE SIGNS

10      facial structure estimating device

| | |
|---|---|
| 11 | acquiring unit |
| 12 | memory |
| 13 | controller |
| 14 | camera |
| 15 | identifier |
| 16 | estimator |
| 17 | evaluator |
| 18 | general estimator |
| 18a | primary general estimator |
| 19 | individual estimator |
| 20 | external device |
| 21 | specific extractor |
| 22 | other-than-specific extractor |
| 23 | inferring unit |
| 24 | non-specific extractor |
| 25 | learning specific extractor |
| 26 | learning inferring unit |
| CB1 | set of facial image and labeled facial structure |
| CB2 | set of facial image, labeled facial structure, and validity |
| CB3 | set of facial image and pseudo labeled facial structure |
| CB4 | set of facial image, labeled facial structure, and validity |
| CB5 | set of facial image and pseudo labeled facial structure of specific individual |
| F | feature |
| FI | facial image |
| gFS | estimated facial structure |
| lFS | labeled facial structure |
| sFI | facial image of specific individual |
| tgFS | facial structure being learned |
| vlFS | pseudo labeled facial structure |

**Claims**

1. A facial structure estimating device comprising:

   an acquiring unit configured to acquire a facial image; and
   a controller configured to output a facial structure of the facial image,
   wherein the controller
   functions as an identifier configured to identify an individual of the facial image acquired by the acquiring unit based on the facial image, an estimator configured to estimate the facial structure of the facial image acquired by the acquiring unit based on the facial image, and an evaluator configured to calculate a validity of the facial structure estimated by the estimator and configured to allow the facial image and the facial structure for which a validity is greater than or equal to a threshold to be applied to training of the estimator, and
   causes application of the facial image and the facial structure whose validity is greater than or equal to the threshold to training of the estimator to be based on an identification result of the individual produced by the identifier.

2. The facial structure estimating device according to claim 1,

   wherein the estimator includes a plurality of individual estimators, and
   the facial structure is estimated for the facial image acquired by the acquiring unit by the individual estimator that has been trained for the individual identified by the identifier.

3. The facial structure estimating device according to claim 2,

   wherein the estimator includes a general estimator that has already been trained, and
   the individual estimators are trained using a facial image and a facial structure having a validity greater than or equal to a threshold according to the evaluator for a facial structure estimated by the general estimator.

9

4. The facial structure estimating device according to claim 2 or 3,
wherein the individual estimators each include a feature extractor and the feature extractor extracts a feature point of the facial image based on an extraction result of the feature extractor corresponding to a person other than the individual corresponding to that individual estimator.

5. A facial structure estimating method comprising:

an acquiring step of acquiring a facial image; and
an output step of outputting a facial structure of the facial image,
wherein the output step includes
an identifying step of identifying an individual in the facial image acquired in the acquiring step based on the facial image,
an estimating step of estimating the facial structure of the facial image acquired in the acquiring step based on the facial image,
an evaluating step of calculating a validity of the facial structure estimated in the estimating step and allowing the facial image and the facial structure for which the validity is greater than or equal to a threshold to be applied to training of the estimating step, and
an applying step of causing application of the facial image and the facial structure for which the validity is greater than or equal to the threshold to training of the estimating step to be based on an identification result of the individual produced by the identifying step.

6. A facial structure estimating program configured to make a computer function as:

an acquiring unit configured to acquire a facial image; and
a controller configured to output a facial structure of the facial image,
wherein the controller
functions as an identifier configured to identify an individual of the facial image acquired by the acquiring unit based on the facial image, an estimator configured to estimate the facial structure of the facial image acquired by the acquiring unit based on the facial image, and an evaluator configured to calculate a validity of the facial structure estimated by the estimator and configured to allow the facial image and the facial structure for which a validity is greater than or equal to a threshold to be applied to training of the estimator, and
causes application of the facial image and the facial structure for which a validity is greater than or equal to the threshold to training of the estimator to be based on an identification result of the individual produced by the identifier.

FIG. 1

# FIG. 2

# FIG. 3

CB1

FI

IFS

18a

PRIMARY GENERAL ESTIMATOR

gFS

COMPARISON

VALIDITY

EP 4 170 584 A1

# FIG. 4

FIG. 5

# FIG. 6

FI

vIFS

CB3

SUPERVISED LEARNING

PRIMARY GENERAL
ESTIMATOR

18a

SECONDARY
GENERAL
ESTIMATOR

18b

EP 4 170 584 A1

EP 4 170 584 A1

FIG. 7

# FIG. 8

CB4 — VALIDITY — FI, vIFS

SUPERVISED LEARNING

PRIMARY EVALUATOR — 17a

SECONDARY EVALUATOR — 17b

EP 4 170 584 A1

# FIG. 9

sFI

+

user1 (IDENTIFYING NAME)

SUPERVISED LEARNING

IDENTIFIER 15

EP 4 170 584 A1

FIG. 10

sFI

GENERAL ESTIMATOR

18

gFS

CB5

sFI

vIFS(gFS)

EVALUATOR

17

VALIDITY GREATER THAN OR EQUAL TO THRESHOLD

VALIDITY LESS THAN THRESHOLD

DISCARD

EP 4 170 584 A1

# FIG. 11

sFI

vIFS

CB5

SUPERVISED LEARNING →

INDIVIDUAL ESTIMATOR

19

# FIG. 12

START

SUPERVISED LEARNING OF FACIAL IMAGE USING IDENTIFYING NAME OF NEW OCCUPANT AS GROUND TRUTH — S100

STORE DATA FOR BUILDING IDENTIFIER — S101

ESTIMATE FACIAL STRUCTURE USING GENERAL ESTIMATOR — S102

CALCULATE VALIDITY USING EVALUATOR — S103

VALIDITY ≥ THRESHOLD? — S104

NO

YES

COMBINE FACIAL IMAGE AND FACIAL STRUCTURE — S105

DISCARD — S106

ENOUGH ACCUMULATED? — S107

NO

YES

SUPERVISED LEARNING OF FACIAL IMAGES USING FACIAL STRUCTURES AS GROUND TRUTHS — S108

STORE DATA FOR BUILDING INDIVIDUAL ESTIMATOR — S109

END

# FIG. 13

```
      ┌──────────┐
      │  START   │
      └──────────┘
           │
           ▼
┌─────────────────────────┐
│    IDENTIFY INDIVIDUAL   │ ～ S200
└─────────────────────────┘
           │
           ▼
┌─────────────────────────┐
│ SELECT INDIVIDUAL ESTIMATOR │ ～ S201
└─────────────────────────┘
           │
           ▼
┌─────────────────────────┐
│  ESTIMATE FACIAL STRUCTURE  │ ～ S202
└─────────────────────────┘
           │
           ▼
┌─────────────────────────┐
│          OUTPUT         │ ～ S203
└─────────────────────────┘
           │
           ▼
      ┌──────────┐
      │   END    │
      └──────────┘
```

FIG. 14

# FIG. 15

INDIVIDUAL ESTIMATOR CORRESPONDING TO SPECIFIC INDIVIDUAL

SPECIFIC INDIVIDUAL

gFS

sFI

21

23

F

24

INDIVIDUAL ESTIMATOR CORRESPONDING TO NON-SPECIFIC INDIVIDUAL OR GENERAL ESTIMATOR

EP 4 170 584 A1

# FIG. 16

# FIG. 17

INDIVIDUAL ESTIMATOR CORRESPONDING TO NON-SPECIFIC INDIVIDUAL OR GENERAL ESTIMATOR

EP 4 170 584 A1

## INTERNATIONAL SEARCH REPORT

| | International application No. |
|---|---|
| | PCT/JP2021/021274 |

A. CLASSIFICATION OF SUBJECT MATTER
G06T 7/00(2017.01)i
FI: G06T7/00 660A

According to International Patent Classification (IPC) or to both national classification and IPC

B. FIELDS SEARCHED

Minimum documentation searched (classification system followed by classification symbols)
G06T7/00

Documentation searched other than minimum documentation to the extent that such documents are included in the fields searched
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2018-156451 A (TOSHIBA CORP.) 04 October 2018 (2018-10-04) paragraphs [0012], [0043] | 1-6 |
| A | JP 10-232934 A (TOSHIBA CORP.) 02 September 1998 (1998-09-02) paragraphs [0035]-[0051] | 1-6 |

☐ Further documents are listed in the continuation of Box C. ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 August 2021 (10.08.2021) | 17 August 2021 (17.08.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT
Information on patent family members

International application No.

PCT/JP2021/021274

| Patent Documents referred in the Report | Publication Date | Patent Family | Publication Date |
|---|---|---|---|
| JP 2018-156451 A | 04 Oct. 2018 | US 2018/0268297 A1 paragraphs [0019], [0051] | |
| JP 10-232934 A | 02 Sep. 1998 | (Family: none) | |

Form PCT/ISA/210 (patent family annex) (January 2015)

**REFERENCES CITED IN THE DESCRIPTION**

**Patent documents cited in the description**

- JP 2020106443 A

- WO 2019176994 A